# EUROPÄISCHE PATENTSCHRIFT

(11) **EP 2 871 753 B1**
(45) Veröffentlichungstag und Bekanntmachung des Hinweises auf die Patenterteilung: **19.06.2019**
(21) Anmeldenummer: 13005299.6
(22) Anmeldetag: 11.11.2013
(51) Int. Cl.: H02K 3/00

(54) **Elektrische Maschine**
Electric machine
Machine électrique

(43) Veröffentlichungstag der Anmeldung: 13.05.2015
(73) Patentinhaber: LEANTEC Motor GmbH, 07318 Saalfeld (DE)
(72) Erfinder: Müller, Udo, 82319 Starnberg (DE); Hein, Sören, 80538 München (DE)
(74) Vertreter: Steiniger, Carmen

(56) Entgegenhaltungen:
- EP-A1- 2 255 431
- WO-A1-2009/115247
- JP-A- S5 594 554

## Beschreibung

Die Erfindung betrifft einen Stator für eine elektrische Maschine, mit einem Statorblock und mit mindestens einem ersten und einem zweiten Wicklungsstrang, wobei der erste und der zweite Wicklungsstrang mit Strom unterschiedlicher Phase gespeist werden, und mit mindestens einer in dem Statorblock befindlichen Statornut, wobei in der Statornut mehrere Lagen des ersten und mehrere Lagen des zweiten Wicklungsstrangs vorgesehen sind. Ferner bezieht sich die Erfindung auf eine elektrische Maschine mit einem solchen Stator.

Die Erfindung bezieht sich auf einen Stator für eine elektrische Maschine, beispielsweise einen Elektromotor. Die elektrische Maschine ist mehrphasig ausgeführt. Der Stator besitzt einen Statorblock, der mit mehreren Wicklungssträngen versehen ist, die jeweils mit Strom unterschiedilcher Phase bestromt werden. Die Wicklungsstränge werden in eine oder mehrere Statornuten in dem Statorblock eingebracht.

Der Statorblock weist häufig Unebenheiten auf, an deren Spitzen sich das Feld lokal konzentriert. Die Anforderungen an die Isolierung der Statorwicklung gegen den Statorblock sind daher entsprechend hoch. Es muss eine relativ dicke elektrische Isolierung zwischen der Statorwicklung und dem Stator vorgesehen werden, um die Spitzenfeldstärken abzuschirmen.

In der Regel sind elektrische Isolatoren auch schlechte Wärmeleiter. Das heißt, die elektrische Isolation um die Statorwicklung bildet auch eine schlecht wärmeleitende Isolierschicht. Dies ist dann problematisch, wenn große Ströme in der Statorwicklung fließen und relativ große Verlustwärmeleistungen abgeführt werden müssen.

Im Stand der Technik wird für einen Wicklungsstrang des Stators beispielsweise ein Kupferdraht mit Lackisolierung verwendet. Mehrere Lagen des Kupferdrahts werden neben- und übereinander in eine Statornut eingelegt. Der Lack isoliert dabei aneinander grenzende Lagen des Kupferdrahts gegeneinander. Allerdings reicht die Lackisolierung häufig nicht aus, um den Kupferdraht gegen den Statorblock zu isolieren. Aus diesem Grund ist es bekannt, eine zusätzliche Kunststoff- oder Papierisolationsschicht zwischen dem Kupferdraht und dem Statorblock vorzusehen. In dem Oberbegriff des Hauptanspruches sind die durch den Stand der Technik EP 2 255 431 bekannten Merkmale der Erfindung aufgenommen.

Bei Transformatoren ist auch bekannt, den Wicklungsstrang aus Aluminium herzustellen. In der Regel wird ein Aluminiumblech eingesetzt, welches mit einer elektrisch isolierenden Eloxalschicht aus Aluminiumoxid versehen ist. Dieses Material hat den Vorteil, auch bei hohen Temperaturen von beispielsweise bis zu 500°C stabil zu sein und einen etwa zwei Größenordnungen höheren Wärmeleitwert als die oben beschriebenen lackisolierten Kupferdrähte zu haben.

Bei höherfrequentem Wechselstrom spielt zwischen benachbarten Leitern der Proximity-Effekt eine wesentliche Rolle. Der Proximity-Effekt ist auf den magnetischen Streufluss zwischen den Leitern zurückzuführen. Hierdurch wird der Strom an die Oberfläche des Leiters gedrängt und so der effektive Leiterquerschnitt reduziert. Der elektrische Widerstandsbelag des Leiters wird so in nachteiliger Weise vergrößert.

Dieser Effekt erhöht bei Frequenzen ab mehreren hundert Hertz den Verlustwiderstand in eloxierten Aluminiumbändern deutlich. Aus diesem Grund werden bei elektrischen Maschinen, wie Motoren und Generatoren, die Wicklungsstränge des Stators bisher aus dünnen lackisolierten Kupferdrähten hergestellt.

Die Verwendung von isoliertem Kupferdraht hat jedoch den Nachteil geringer Temperaturbeständigkeit. So ist die Lackisolierung beispielsweise nur bis Temperaturen von etwa 200 °C stabil. Außerdem hat die Kombination aus lackisoliertem Kupferdraht mit zusätzlicher Kunststoff- oder Papierisolierung einen relativ geringen Wärmeleitwert. Das bedeutet, dass die in dem Wicklungsstrang erzeugte Wärme nur schlecht über den Statorblock abgeführt wird.

Ein weiterer Nachteil ist der schlechte Füllgrad, mit dem das Kupfer in die Statornut eingebracht werden kann. In der Statornut liegen viele Kupferlitzen, die jeweils einzeln mit einer Lackisolierung versehen sind, neben- und übereinander. Ein beträchtlicher Teil der Statornut wird daher für die einzelnen Lackisolierungen benötigt, so dass der Füllgrad häufig nur etwa 50% erreicht.

Aufgabe vorliegender Erfindung ist es daher, einen Stator für eine elektrische Maschine zur Verfügung zu stellen, mit dem die oben genannten Probleme möglichst vermieden werden.

Insbesondere soll ein Stator vorgeschlagen werden, bei dem der Proximityeffekt wesentlich reduziert wird.

Weiter liegt der Erfindung die Aufgabe zugrunde, den Füllgrad des Stators zu erhöhen, d.h. einen größeren Querschnitt der Statornut mit elektrisch leitfähigem Material zu füllen.

Eine weitere Aufgabe liegt darin, das magnetische Streufeld des Statorblocks zu reduzieren.

Außerdem soll ein Wicklungsstrang mit einem guten Wärmeleitwert zur Verfügung gestellt werden. Die im Inneren des Wicklungsstrangs erzeugte Wärme soll gut an den Statorblock abgegeben werden können.

Eine weitere Aufgabe liegt darin, einen Stator mit einem Wicklungsstrang vorzuschlagen, der einfacher herzustellen ist.

Eine weitere Aufgabe liegt darin, einen Stator zu entwickeln, der eine verbesserte Wärmeabführung über den Statorblock ermöglicht.

Mindestens eine dieser Aufgaben wird durch einen Stator für eine elektrische Maschine gelöst, welcher einen Statorblock und mindestens einen ersten und einen zweiten Wicklungsstrang aufweist, wobei der erste und der zweite Wicklungsstrang mit Strom unterschiedlicher Phase gespeist werden, und wobei sich in dem Statorblock mindestens eine Statornut befindet, wobei in der Statornut mehrere Lagen des ersten und mehrere Lagen des zweiten Wicklungsstrangs vorgesehen sind, und welcher dadurch gekennzeichnet ist, dass in der Statornut eine Lage des ersten Wicklungsstrangs an eine Lage des zweiten Wicklungsstrangs angrenzt.

Der erfindungsgemäße Stator wird in einer mehrphasigen elektrischen Maschine, einem Elektromotor oder einem Generator eingesetzt. Der Begriff "mehrphasig" soll in diesem Zusammenhang bedeuten, dass die elektrische Maschine mit mindestens zwei Strömen unterschiedlicher Phase beaufschlagt wird. Entsprechend sind mindestens ein erster Wicklungsstrang und ein zweiter Wicklungsstrang vorgesehen, über die ein erster und ein zweiter Strom unterschiedlicher Phase fließen. Es kann auch durchaus sinnvoll sein, noch weitere Wicklungsstränge vorzusehen, die mit entweder dem ersten Strom, dem zweiten Strom oder einem oder mehreren weiteren Strömen anderer Phase versorgt werden.

Der Stator besitzt einen Statorblock, in den mindestens eine Statornut eingebracht ist. Die Statornut dient zur Aufnahme der Wicklungsstränge oder eines Teils der Wicklungsstränge. Die Statornut verläuft in dem Statorblock vorzugsweise kreisförmig oder kreissegmentförmig um die Achse, um die der Rotor der elektrischen Maschine rotiert.

Die Statornut hat eine Ausdehnung in axialer Richtung (Tiefe der Statornut), eine Ausdehnung in radialer Richtung (Breite der Statornut) sowie eine Längsausdehnung, die sich kreisförmig oder kreissegmentförmig um die Rotationsachse erstreckt. Die Ausrichtungen "radial" und "axial" beziehen sich hierbei jeweils auf die Rotationsachse, um die sich der Rotor einer elektrischen Maschine mit dem erfindungsgemäßen Stator drehen würde. Die Wicklungsstränge oder einzelne Leitungselemente, aus denen die Wicklungsstränge aufgebaut werden, werden in mehreren Lagen übereinander in die Statornut eingelegt. Der Begriff "Lage" bezeichnet hierbei eine bestimmte Ebene senkrecht zur axialen Richtung.

Erfindungsgemäß werden in dieselbe Statornut sowohl Leitungselemente des ersten Wicklungsstrangs als auch Leitungselemente des zweiten Wicklungsstrangs eingebracht. Die einzelnen Leitungselemente der beiden Wicklungsstränge werden so vorgesehen, dass übereinander liegende Leitungselemente zu unterschiedlichen Wicklungssträngen gehören, d.h. eine Lage des ersten Wicklungsstrangs grenzt an eine Lage des zweiten Wicklungsstrangs an.

Die durch die beiden aneinander grenzenden Wicklungsstränge fließenden Ströme sind außer Phase, so dass der Proximity-Effekt deutlich reduziert wird. Die Erfindung ermöglicht damit auch den Einsatz von anderen Leiterprofilen als dünnen Drähten. So kann der Querschnitt eines Wicklungsstrangs bzw. einer Lage eines Wicklungsstrangs in weiten Grenzen variiert werden und beispielsweise an die Form der Statornut angepasst werden. Es ist nicht mehr zwingend notwendig auf dünne Drähte oder dünne Litzen zurückzugreifen. Auch rechteckförmige Profile, wie zum Beispiel bandförmige Leiter, können eingesetzt werden, welche bisher aufgrund der negativen Auswirkungen des Proximity-Effekts nicht verwendet wurden.

Von Vorteil sind alle Lagen des ersten und des zweiten Wicklungsstrangs so angeordnet, dass keine Lage des ersten Wicklungsstrangs an eine andere Lage des ersten Wicklungsstrangs angrenzt. Nur Lagen von unterschiedlichen Wicklungssträngen grenzen aneinander. Da durch die verschiedenen Wicklungsstränge Ströme unterschiedlicher Phase fließen, wird auf diese Weise der Proximity-Effekt unterdrückt und der gesamte Querschnitt eines Wicklungsstrangs wird für den Stromfluss genutzt. Eine Erhöhung des elektrischen Widerstands bzw. des Widerstandsbelag des Wicklungsstrangs durch den Proximity-Effekt wird vermieden.

Der erste und/oder der zweite Wicklungsstrang sind vorzugsweise jeweils aus mehreren Leitungselementen gefertigt, die miteinander elektrisch leitend verbunden werden und dann den jeweiligen Wicklungsstrang bilden.

Von Vorteil sind der erste und/oder der zweite Wicklungsstrang oder Teile bzw. Leitungselemente des ersten und/oder des zweiten Wicklungsstrangs aus einem Blech gefertigt und/oder bandförmig ausgeführt. Das Blech oder Band ist aus einem elektrisch gut leitenden Material, in der Regel einem Metall, insbesondere aus Kupfer oder Aluminium gefertigt.

Diese Ausführungsform hat gegenüber einem Wicklungsstrang mit rundem Querschnitt, d.h. gegenüber einem üblichen Draht, den Vorteil, dass der Querschnitt des Bleches oder Bandes an den Querschnitt der Statornut angepasst werden kann. Beispielsweise kann die Breite des Bandes entsprechend der Breite der Statornut ausgeführt werden, so dass eine Lage des Wicklungsstrangs die Breite der Statornut genau ausfüllt. Auf diese Weise kann der Füllgrad, d.h. das Querschnittsverhältnis von elektrisch leitfähigem Material zum Gesamtquerschnitt der Statornut, deutlich erhöht werden.

Außerdem ist das Einbringen von vielen parallelen dünnen Kupferdrähten oder Kupferlitzen in die Statornut im Rahmen einer Serienfertigung nur schwer realisierbar. Durch die Erfindung wird die Fertigung des Stators wesentlich erleichtert.

Es ist auch möglich zwei oder mehr Bänder in radialer Richtung nebeneinander in die Statornut einzulegen. Vorzugsweise wird jedoch ein Band vorgesehen, welches sich in radialer Richtung über die gesamte Breite der Statornut erstreckt.

Aluminium mit einer Isolationsschicht aus Aluminiumoxid zeichnet sich durch eine gute Temperaturbeständigkeit aus. Vorzugsweise werden die Wicklungsstränge daher aus eloxiertem Aluminium hergestellt. Das Aluminium wird oxidiert und erhält so auf dessen Oberfläche eine elektrisch isolierende Schicht aus Aluminiumoxid. Von Vorteil werden für die Wicklungsstränge Bleche oder bandförmige Elemente aus eloxiertem Aluminium verwendet.

Aus Fertigungsgründen ist es besonders vorteilhaft, aus dem Blech bandförmige Leitungselemente, deren Form und Abmessungen an die Statornut angepasst sind, auszuschneiden, auszustanzen oder anderweitig vorzufertigen. Nach dem Eloxieren dieser Leitungselemente können diese einfach in die Statornut eingelegt werden.

Die bandförmigen Leitungselemente können auch durch Flachdrücken eines Rohrs oder ähnlichen Profils hergestellt werden. Das Rohr oder Profil kann mittels eines Werkzeugs in die gewünschte Form gebogen und flach gedrückt werden. Dies hat gegenüber dem Ausstanzen den Vorteil, dass die Kanten nicht scharf, sondern rund sind. Beim Eloxieren besteht nämlich die Gefahr, dass sich die oxidische Schutzschicht an scharfen Kanten nicht oder nicht ausreichend gut bildet. Dies wird durch die beim Flachdrücken entstehenden Rundungen vermieden.
Mehrere dieser Leitungselemente können dann beispielsweise in axialer Richtung übereinander in die Statornut eingelegt werden und dann so elektrisch leitend miteinander verbunden werden, dass jedes zweite der übereinander liegenden Leitungselemente einen Teil einer Lage oder eine gesamte Lage des ersten Wicklungsstrangs bildet und die dazwischen liegenden Leitungselemente Lagen des zweiten Wicklungsstrangs bilden.

Vorzugsweise erfolgt die elektrische Verbindung der einzelnen Leitungselemente und der einzelnen Lagen eines Wicklungsstrangs außerhalb der Statomut. Hierzu werden die Leitungselemente, Bleche, Bänder oder bandförmigen Elemente aus der Statornut herausgeführt und mit einem Anschluss versehen. Es ist dann nur mehr notwendig, diese Anschlüsse miteinander zu verbinden.

Es hat sich gezeigt, dass die Aluminiumoxidschicht in vielen Fällen eine ausreichende elektrische Isolierung bietet, so dass eine zusätzliche Isolierung zwischen den einzelnen Aluminiumelementen, Aluminiumblechen oder Aluminiumbändern nicht notwendig ist.

Es hat sich weiter als günstig erwiesen, in dem Statorblock mindestens zwei im Wesentlichen parallel verlaufende Statornuten vorzusehen. Die Statornuten werden vorzugsweise in radialer Richtung versetzt zueinander angeordnet. Ein Wicklungsstrang wird so in die Statornuten eingebracht, dass innerhalb einer Statornut der Stromfluss durch alle Leitungselemente desselben Wicklungsstrangs in dieselbe Richtung verläuft. Der Stromfluss durch die in die andere Statornut eingebrachten Leitungselemente desselben Wicklungsstrangs ist dagegen entgegengesetzt parallel ausgerichtet. Auf diese Weise wird nach außen das Streufeld der in die eine Statornut eingebrachten Leitungselemente des Wicklungsstrangs durch die in die andere Statornut eingebrachten Leitungselemente desselben Wicklungsstrangs kompensiert.

Der Statorblock weist teilweise Grate, Spitzen und eine Oberflächenrauhigkeit auf. Auch die Aluminiumoxid-Schicht hat eine relativ rauhe Oberfläche. An solchen Inhomogenitäten können hohe elektrische Feldstärken auftreten. Sollte die elektrische Isolierung der Wicklungsstränge nicht ausreichen, beispielsweise weil die Eloxalschicht auf den Aluminiumblechen nicht dick genug hergestellt werden kann, ist es vorteilhaft, den Statorblock so auszuführen, dass dieser zumindest in bestimmten Bereichen, insbesondere in den an die Statornut angrenzenden Bereichen, einen spezifischen elektrischen Widerstand von der Größenordnung eines Halbleiters, zum Beispiel zwischen 10⁴ Ohm mm²/m und 10⁸ Ohm mm²/m, besitzt. Diese zwar relativ hochohmigen, aber dennoch in gewissem Umfang leitenden Bereiche des Statorblocks dienen dazu, das elektrische Feld im Bereich der Statornut und insbesondere in der Isolierung des Wicklungsstrangs zu homogenisieren, so dass Feldspitzen geglättet werden.

In einer bevorzugten Ausführungsform besitzt der hochohmige Bereich des Statorblocks einen Widerstand von mehr als 50 kOhm (50.000 Ω), mehr als 100 kOhm, mehr als 200 kOhm oder mehr als 500 kOhm. Vorzugsweise besitzt dieser hochohmige Bereich einen Wert von weniger als 10 MegaOhm, weniger als 5 MegaOhm oder weniger als 1 MegaOhm (1.000.000 Ω).

Von Vorteil beträgt der Widerstand des hochohmigen Bereichs mehr als das Hundertfache oder mehr als das Tausendfache des Widerstands des Wicklungsstrangs.

In einer Ausführungsform wird der Statorblock oder werden Bereiche des Statorblocks aus einer Verguss- oder Verbundmasse gefertigt, welche einen hochohmigen Widerstandsbelag aufweist Hierzu wird beispielsweise eine Verguss- oder Verbundmasse eingesetzt, die zwar elektrisch leitend ist, aber einen hochohmigen Widerstandsbelag besitzt. Der Widerstandsbelag, d.h. der elektrische Widerstand pro Längeneinheit, ist vorzugsweise mindestens zwei oder drei Größenordnungen größer als der Widerstandsbelag des Wicklungsstrangs. Als Verguss- oder Verbundmasse kommt beispielsweise ein Harz, Silikon oder ein Kunststoff in Betracht, welche mit elektrisch leitenden Partikeln aus zum Beispiel Graphit oder Aluminiumoxid versetzt sind.

Der Statorblock ist bevorzugt aus weichmagnetischem Material (Soft Magnetic Composite - SMC) gefertigt. Dies erlaubt eine kostengünstige Herstellung komplexer Statorgeometrien mit sehr niedrigen Wirbelstromverlusten und isotropen magnetischen Eigenschaften.

Die Erfindung eignet sich sowohl für Elektromotoren als auch Generatoren und insbesondere für als Transversalflussmaschine ausgeführte elektrische Maschinen. Unter einer Transversalflussmaschine wird eine elektrische Maschine verstanden, bei der sich der magnetische Fluss im Stator im Wesentlichen in einer Ebene bewegt, die senkrecht zur Bewegungsrichtung oder Rotationsrichtung des Läufers oder Rotors liegt. Man kann auch sagen: Der durch den oder die Wicklungsstränge des Stators fließende Strom fließt im Wesentlichen parallel zur Bewegungsrichtung des Läufers/Rotors. Besonders geeignet ist die Erfindung für Axial-Transversalflussmaschinen, bei denen der magnetische Fluss durch den Luftspalt zwischen Stator und Rotor im Wesentlichen in axialer Richtung verläuft - im Gegensatz zu Radial-Transversalflussmaschinen, bei denen der magnetische Fluss durch den Luftspalt zwischen Stator und Rotor im Wesentlichen in radialer Richtung verläuft.

In einer bevorzugten Ausführung der Erfindung weist ein Wicklungsstrang mehrere in der Statornut befindliche Leitungselemente auf, wobei ein oder mehrere Leitungselemente planar angeordnet sind und eine Lage bilden. Das heißt, das oder die Leitungselemente sind in einer Ebene, insbesondere in einer Ebene senkrecht zur Rotationsachse des Rotors der elektrischen Maschine ausgerichtet. Die einzelnen Lagen werden außerhalb der Statornut so miteinander verbunden, dass diese in Reihe geschaltet sind und einen Wicklungsstrang bilden. In der Statornut verlaufen die einzelnen Lagen des Wicklungsstrangs parallel zueinander und parallel zur Rotationsebene des Rotors. Weder die Leitungselemente desselben Wicklungsstrangs noch die Leitungselemente verschiedener Wicklungsstränge kreuzen sich in den Statomuten.

Die Erfindung betrifft auch eine elektrische Maschine mit einem Stator gemäß Anspruch 1. Besondere Vorteile bringt die Erfindung bei elektrischen Maschinen, Elektromotoren oder Generatoren, die einen Rotor und insbesondere genau einen Rotor besitzen. Die Erfindung ermöglicht eine elektrische Maschine mit konstantem Drehmoment. Es ist nicht notwendig, mehrere einphasige Maschinen mechanisch miteinander zu koppeln, um ein konstantes Drehmoment zu erzeugen. Die mit einer mechanischen Kopplung verbundenen Probleme werden dadurch vermieden.

Bei einer zweiphasigen elektrischen Maschine sind zwei Wicklungsstränge vorgesehen, welche mit einem in der Phase um 90° versetzten Strom beaufschlagt werden. Der Stator weist beispielsweise vier Statorblöcke mit jeweils einem Paar von Statornuten auf, wobei jedes Paar an Statornuten jeweils eine radial innere und eine radial äußere, parallel zueinander verlaufende Statornut besitzt. Innerhalb eines Statorblocks werden die beiden Wicklungsstränge so angeordnet, dass innerhalb einer Statornut keine Lagen desselben Wicklungsstrangs aneinandergrenzen und dass innerhalb einer Lage zu jedem Leitungselement eines Wicklungsstrangs in der äußeren Statornut ein entsprechendes Leitungselement desselben Wicklungsstrangs in der inneren Statornut vorgesehen ist, wobei der Stromfluss durch das Leitungselement in der inneren Statornut entgegengesetzt zu dem Stromfluss in der äußeren Statornut verläuft.

In einem Statorblock wird beispielsweise der erste Wicklungsstrang mit einem Strom +I1 und der zweite Wicklungsstrang mit einem in der Phase um 90° versetzten Wechselstrom +I2 beaufschlagt. In den anderen drei Statorblöcken werden die beiden Wicklungsstränge mit den Kombinationen +I1, I2 sowie -I1, +I2 und -I1, -I2 bestromt. Auf diese Weise wird eine möglichst gute Homogenisierung des Drehmoments erzielt.

Die Erfindung ist nicht auf zweiphasige elektrische Maschinen beschränkt. Das erfindungsgemäße Konzept kann in entsprechender Weise auf drei- und mehrphasige Maschinen ausgeweitet werden.

Andererseits kann es bei sehr großen Maschinen auch sinnvoll sein, mehrere zweiphasige Maschinen, die jeweils zueinander phasenversetzt ausgeführt sind, miteinander zu kombinieren. In diesem Fall kann der Stator mehrere Statorsektoren mit beispielsweise je vier Statorblöcken aufweisen. In einem Statorsektor sind die einzelnen Statorblöcke wie oben beschrieben ausgeführt. Innerhalb eines Statorsektors sind ein erster und ein zweiter Wicklungsstrang vorgesehen, welche phasenversetzt bestromt werden. Die Wicklungsstränge unterschiedlicher Statorsektoren besitzen ebenfalls einen Phasenversatz zueinander.

Die Erfindung besitzt zahlreiche Vorteile gegenüber den bekannten Konzepten. So wird trotz Verwendung von Wicklungssträngen mit großem Querschnitt der Proximity-Effekt stark reduziert. Die einzelnen Lagen eines Wicklungsstrangs können planar angeordnet werden, so dass jede Lage in einer Ebene parallel zur Rotationsebene des Rotors verläuft. Innerhalb der Statornut ist kein "Ebenenwechsel" erforderlich. Die Wicklungsstränge sind einfach und schnell zu fertigen, da jeder Wicklungsstrang modular aus mehreren gleichförmigen Leitungselementen aufgebaut werden kann.

Die Erfindung sowie weitere Einzelheiten und Ausgestaltungen der Erfindung werden im Folgenden anhand der schematischen Zeichnungen näher erläutert. Hierbei zeigen
- Figur 1: das Wicklungsschema eines erfindungsgemäßen Stators,
- Figur 2: ein Leitungselement, aus dem die beiden Wicklungsstränge aufgebaut sind,
- Figur 3: die Anordnung der Lagen der beiden Wicklungsstränge in dem Statorblock 1a der Figur 1,
- Figur 4: die Anordnung der Lagen der beiden Wicklungsstränge in dem Statorblock 1b der Figur 1,
- Figur 5: den resultierenden Durchflutungsvektor im Statorblock 1a und
- Figur 6: den resultierenden Durchflutungsvektor im Statorblock 1b.

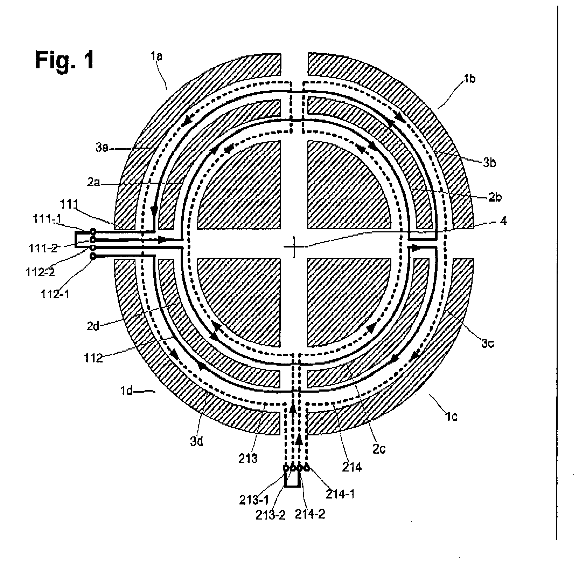

In Figur 1 ist schematisch der Stator eines zweiphasigen Elektromotors dargestellt. Der Stator umfasst vier Statorblöcke 1a, 1b, 1c, 1d, die jeweils viertelkreisförmig ausgebildet sind. Jeder Statorblock 1a, 1b, 1c, 1d ist jeweils mit einer inneren Statornut 2a, 2b, 2c, 2d und einer äußeren Statornut 3a, 3b, 3c, 3d versehen. Die Statornuten 2a, 2b, 2c, 2d, 3a, 3b, 3c, 3d verlaufen parallel zueinander und ebenfalls kreisförmig um die Drehachse 4 des der Übersichtlichkeit halber nicht dargestellten Rotors.

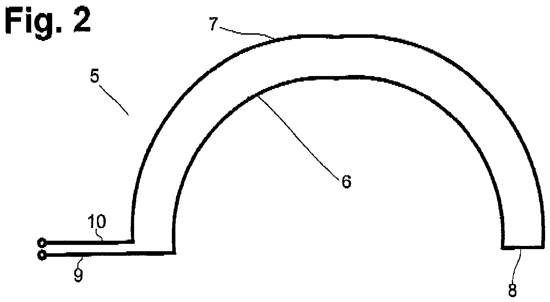

In die Statornuten 2a, 2b, 2c, 2d, 3a, 3b, 3c, 3d sind mehrere Lagen eines ersten und eines zweiten Wicklungsstrangs eingelegt. Der erste und der zweite Wicklungsstrang sind aus Leitungselementen 5 zusammengesetzt, wie sie in Figur 2 dargestellt sind.

Ein Leitungselement 5 ist aus eloxiertem Aluminiumblech gefertigt und besteht aus zwei halbkreisförmigen Bögen 6, 7, deren Form und Größe an die innere und die äußere Statornut 2a, 2b, 2c, 2d, 3a, 3b, 3c, 3d angepasst sind. Der innere Bogen 6 und der äußere Bogen 7 sind an ihrem einen Ende über ein Verbindungsstück 8 miteinander verbunden. An den anderen Enden der Bögen 6,7 sind Anschlusselemente 9, 10 vorgesehen. Das gesamte Leitungselement 5 bestehend aus den Bögen 6, 7, dem Verbindungsstück 8 und den Anschlusselementen 9, 10 kann beispielsweise durch Ausstanzen aus einem Aluminiumblech hergestellt werden.

Die Leitungselemente 5 werden planar in die Statornuten 2a, 2b, 2c, 2d, 3a, 3b, 3c, 3d eingepasst. Die Leitungselemente 5 sind so geformt, dass sie sich in radialer Richtung die gesamte Breite der Statornuten 2a, 2b, 2c, 2d, 3a, 3b, 3c, 3d abdecken.

Ein erstes Leitungselement 111 wird in die Statornuten 2a, 2b, 3b, 3a und ein zweites Leitungselement 112 wird in die Statornuten 2d, 2c, 3c, 3d eingelegt. Die beiden Leitungselemente 111, 112 werden dabei so orientiert, dass deren Anschlusselemente 111-1, 111-2, 112-1, 112-2 im Bereich des Spalts zwischen den beiden Statorblöcken 1a, 1d zu liegen kommen. Die beiden Leitungselemente 111, 112 bilden eine erste Lage 101 des ersten Wicklungsstrangs. Diese erste Lage 101 liegt planar in einer Ebene in den Statornuten 2a, 2b, 2c, 2d, 3a, 3b, 3c, 3d.

In analoger Weise werden zwei Leitungselemente 211, 212 auf die Leitungselemente 111, 112 gelegt. Die Leitungselemente 213, 214 sind dabei um 90° gegen die Leitungselemente 111,112 gedreht, d.h. Leitungselement 213 befindet sich in den Statornuten 2d, 2a, 3a, 3d und Leitungselement 214 entsprechend in den Statornuten 2c, 2b, 3b, 3c. Die Anschlusselemente 213-1, 213-2, 214-1, 214-2 werden wieder nebeneinander angeordnet. Die beiden Leitungselemente 213, 214 bilden eine erste Lage 201 des zweiten Wicklungsstrangs.

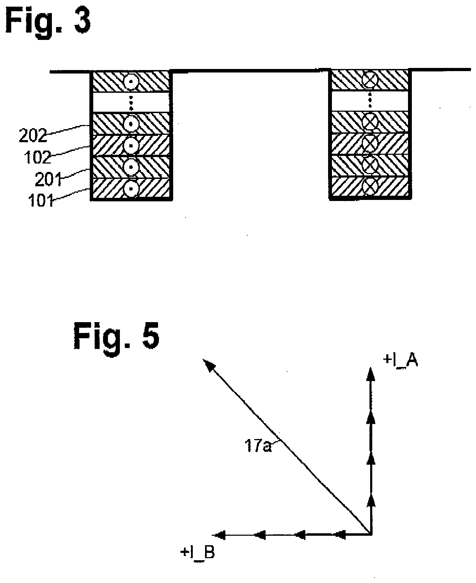

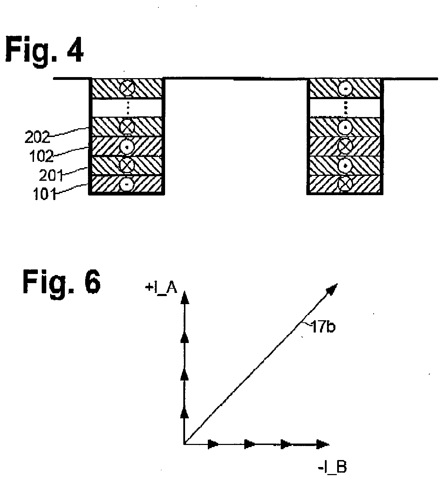

Auf diese erste Lage 201 des zweiten Wicklungsstrangs kommt nun eine zweite Lage 102 des ersten Wicklungsstrangs. Die zweite Lage 102 des ersten Wicklungsstrangs ist identisch mit der ersten Lage 101 des ersten Wicklungsstrangs. Hierauf wird als nächstes eine zweite Lage 202 des zweiten Wicklungsstrangs gelegt. Auf diese Weise werden mehrere Lagen des ersten und des zweiten Wicklungsstrangs abwechselnd aufeinander gelegt (siehe Figuren 3, 4). Alle zu demselben Wicklungsstrang gehörenden Lagen sind hierbei identisch ausgeführt.

Die Anschlusselemente 11-1, 12-1 bzw. 13-1, 14-1 der zu einem Wicklungsstrang gehörenden Leitungselemente befinden sich außerhalb der Statornuten 2a, 2b, 2c, 2d, 3a, 3b, 3c, 3d neben- bzw. übereinander. Die Anschlusselemente 11-1, 12-1 bzw. 13-1, 14-1 werden durch Verbindungsbrücken 15, 16 so miteinander verbunden, dass alle zu einem Wicklungsstrang gehörenden Leitungselemente in Reihe geschaltet sind und den gewünschten Wicklungsstrang ergeben.

Figur 3 zeigt die Anordnung der Lagen 101, 201, 102, 202 des ersten und des zweiten Wicklungsstrangs in der inneren Statornut 2a und der äußeren Statornut 3a des Statorblocks 1a. Eine entsprechende Anordnung ist in Figur 4 für den Statorblock 1b dargestellt.

Figur 5 zeigt schematisch die Bestromung der beiden Wicklungsstränge und den daraus in dem Statorblock 1a resultierenden Durchflutungsvektor 17. Durch den ersten Wicklungsstrang soll ein Strom I_{A} sin wt und durch den zweiten Wicklungsstrang soll ein Strom I_{B} cos wt fließen. Das heißt, die beiden Wicklungsstränge werden mit um 90° phasenversetzten Wechselströmen bestromt.

In der schematischen Darstellung in Figur 1 durchlaufen beide Ströme I_{A} sin wt und I_{B} cos wt die Leitungselemente 5 im Statorblock 1a jeweils gegen den Uhrzeigersinn. Diese Richtung soll als positiv bezeichnet werden. Entsprechend ergibt sich ein resultierender Strom von + I_{A} sin wt + I_{B} cos wt. Hieraus resultiert unter Berücksichtigung von deren Phasenversatz der in Figur 3a gezeigte Durchflutungsvektor 17a.

Entsprechende Überlegungen können für alle Statorblöcke 1a, 1b, 1c, 1d angestellt werden. Es zeigt sich, dass die resultierenden Durchflutungsvektoren 17a, 17b, 17c, 17d jeweils um 90° gegeneinander phasenversetzt sind. Figur 6 zeigt dies noch einmal beispielhaft für den Statorblock 1b.

Durch den Phasenversatz der resultierenden Durchflutungsvektoren 17a, 17b, 17c, 17d in den einzelnen Statorblöcken 1a, 1b, 1c, 1d ist gewährleistet, dass insgesamt ein gleichförmiges Drehmoment erzeugt wird.

## Patentansprüche

1. Stator für eine elektrische Maschine,
mit einem Statorblock (1a, 1b, 1c, 1d) und mit mindestens einem ersten und einem zweiten Wicklungsstrang (111, 112, 213, 214),
wobei der erste und der zweite Wicklungsstrang (111, 112, 213, 214) mit Strom unterschiedlicher Phase gespeist werden,
und mit mindestens einer in dem Statorblock (1a, 1b, 1c, 1d) befindlichen Statornut (2a, 3a),
wobei in der Statornut (2a, 3a) mehrere Lagen des ersten und mehrere Lagen des zweiten Wicklungsstrangs (111, 112, 213, 214) vorgesehen sind,
**dadurch gekennzeichnet, dass**
in der Statornut (2a, 3a) eine Lage des ersten Wicklungsstrangs (111, 112) an eine Lage des zweiten Wicklungsstrangs (213, 214) angrenzt.

2. Stator nach Anspruch 1, **dadurch gekennzeichnet, dass** in der Statornut (2a, 3a) keine Lage des ersten Wicklungsstrangs (111, 112) an eine andere Lage des ersten Wicklungsstrangs (111, 112) angrenzt.

3. Stator nach einem der vorhergehenden Ansprüche, **dadurch gekennzeichnet, dass** der erste und/oder der zweite Wicklungsstrang (111, 112, 213, 214) aus einem Blech gefertigt sind.

4. Stator nach einem der vorhergehenden Ansprüche, **dadurch gekennzeichnet, dass** der erste und/oder der zweite Wicklungsstrang (111, 112, 213, 214) aus Aluminium, insbesondere aus eloxiertem Aluminium, gefertigt sind.

5. Stator nach einem der vorhergehenden Ansprüche, **dadurch gekennzeichnet, dass** der erste und/oder der zweite Wicklungsstrang (111, 112, 213, 214) aus vorgefertigten, insbesondere ausgestanzten, Aluminiumteilen bestehen.

6. Stator nach einem der vorhergehenden Ansprüche, **dadurch gekennzeichnet, dass** die Isolierung zwischen dem ersten und/oder dem zweiten Wicklungsstrang (111, 112, 213, 214) und dem Statorblock (1a, 1b, 1c, 1d) nur aus einer Aluminiumoxidschicht besteht,

7. Stator nach einem der vorhergehenden Ansprüche, **dadurch gekennzeichnet, dass** der Statorblock (1a, 1b, 1c, 1d) mindestens zwei parallel verlaufende Statornuten (2a, 3a) aufweist.

8. Stator nach Anspruch 7, **dadurch gekennzeichnet, dass** der erste oder der zweite Wicklungsstrang (111, 112, 213, 214) so in den Statornuten (2a, 3a) vorgesehen ist, dass der durch den ersten oder den zweiten Wicklungsstrang (111, 112, 213, 214) in eine Richtung fließende Strom genauso groß wie der in die entgegengesetzte Richtung fließende Strom ist.

9. Stator nach einem der vorhergehenden Ansprüche, **dadurch gekennzeichnet, dass** der Statorblock (1a, 1b, 1c, 1d) einen örtlich variierenden Widerstandsbelag aufweist.

10. Elektrische Maschine mit einem Stator nach einem der vorhergehenden Ansprüche.

11. Elektrische Maschine nach Anspruch 10, **dadurch gekennzeichnet, dass** ein, insbesondere genau ein Rotor vorgesehen ist.

12. Elektrische Maschine nach einem der Ansprüche 10 oder 11, **dadurch gekennzeichnet, dass** ein scheibenförmiger Rotor vorgesehen ist.

13. Elektrische Maschine nach Anspruch 10 bis 12, **dadurch gekennzeichnet, dass** es sich um eine Transversalflussmaschine handelt.

## Claims

1. Stator for an electrical machine
comprising a stator block (1a, 1b, 1c, 1d) with at least one first and one second phase winding (111, 112, 213, 214),
wherein the first and the second phase windings (111, 112, 213, 214) are supplied with current of different phases,
and comprising at least one stator slot (2a, 3a), which is arranged in the stator block (1a, 1b, 1c, 1d),
wherein in the stator slot (2a, 3a) several layers of the first and several layers of the second phase winding (111, 112, 213, 214) are provided,
**characterized in that**
in the stator slot (2a, 3a) a first layer of the first phase winding (111, 112) adjoins a layer of the second phase winding (213, 214).

2. Stator according to claim 1, **characterized in that** no layer of the first phase winding (111, 112) adjoins another layer of the first phase winding (111, 112) in the stator slot (2a, 3a).

3. Stator according to one of the preceding claims, **characterized in that** the first and/or the second phase winding (111, 112, 213, 214) are made from a metal sheet.

4. Stator according to one of the preceding claims, **characterized in that** the first and/or the second phase winding (111, 112, 213, 214) are made of aluminum, particularly of anodized aluminum.

5. Stator according to one of the preceding claims, **characterized in that** the first and/or the second phase winding (111, 112, 213, 214) consist of prefabricated, particularly punched, aluminum parts.

6. Stator according to one of the preceding claims, **characterized in that** the insulation between the first and/or the second phase winding (111, 112, 213, 214) and the stator block (1a, 1b, 1c, 1d) consist of only one aluminum oxide layer.

7. Stator according to one of the preceding claims, **characterized in that** the stator block (1a, 1b, 1c, 1d) comprises at least two parallel stator slots (2a, 3a).

8. Stator according to claim 7, **characterized in that** the first or the second phase winding (111, 112, 213, 214) is provided in the stator slots (2a, 3a) in such a way that the current flowing in one direction through the first or the second phase winding (111, 112, 213, 214) is as big as the current flowing in the opposite direction.

9. Stator according to one of the preceding claims, **characterized in that** the stator block (1a, 1b, 1c, 1d) comprises a locally varying resistance layer.

10. Electrical machine with a stator according to one of the preceding claims.

11. Electrical machine according to claim 10, **characterized in that** one, particularly exactly one, rotor is provided.

12. Electrical machine according to one of the claims 10 or 11, **characterized in that** a disc-shaped rotor is provided.

13. Electrical machine according to claims 10 to 12, **characterized in that** it is a transverse flux machine.

## Revendications

1. Stator pour une machine électrique,
comprenant un bloc stator (1a, 1b, 1c, 1d) et au moins un premier et un deuxième faisceau de bobinage (111, 112, 213, 214),
le premier et le deuxième faisceau de bobinage (111, 112, 213, 214) étant alimentés avec du courant de phase différente,
et comprenant au moins une encoche de stator (2a, 3a) située dans le bloc de stator (1a, 1b, 1c, 1d),
plusieurs couches du premier et plusieurs couches du deuxième faisceau de bobinage (111, 112, 213, 214) étant prévues dans l'encoche de stator (2a, 3a),
**caractérisé en ce que**
dans l'encoche de stator (2a, 3a), une couche du premier faisceau de bobinage (111, 112) est positionnée contiguë à une couche du deuxième faisceau de bobinage (213, 214).

2. Stator selon la revendication 1, **caractérisé en ce que** dans l'encoche de stator (2a, 3a) aucune couche du premier faisceau de bobinage (111, 112) n'est positionnée contiguë à une autre couche du premier faisceau de bobinage (111, 112).

3. Stator selon l'une des revendications précédentes, **caractérisé en ce que** le premier et/ou le deuxième faisceau de bobinage (111, 112, 213, 214) sont constitués d'une tôle métallique.

4. Stator selon l'une des revendications précédentes, **caractérisé en ce que** le premier et/ou le deuxième faisceau de bobinage (111, 112, 213, 214) sont en aluminium, en particulier en aluminium anodisé.

5. Stator selon l'une des revendications précédentes, **caractérisé en ce que** le premier et/ou le deuxième faisceau de bobinage (111, 112, 213, 214) sont constitués des pièces en aluminium préfabriquées, notamment poinçonnées.

6. Stator selon l'une des revendications précédentes, **caractérisé en ce que** l'isolation entre le premier et/ou le deuxième faisceau de bobinage (111, 112, 213, 214) et le bloc stator (1a, 1b, 1c, 1d) consiste uniquement d'une couche d'oxyde d'aluminium.

7. Stator selon l'une des revendications précédentes, **caractérisé en ce que** le bloc stator (1a, 1b, 1c, 1d) présente au moins deux encoches de stator (2a, 3a), qui sont parallèles l'une à l'autre.

8. Stator selon la revendication 7, **caractérisé en ce que** le premier ou le deuxième faisceau de bobinage (111, 112, 213, 214) est prévu dans les encoches de stator (2a, 3a) de telle sorte que le courant traversant le premier ou le deuxième faisceau de bobinage (111, 112, 213, 214) dans une direction est aussi grand que le courant traversant dans la direction opposée.

9. Stator selon l'une des revendications précédentes, **caractérisé en ce que** le bloc stator (1a, 1b, 1c, 1d) présente un revêtement de résistance localement variable.

10. Machine électrique avec un stator selon l'une des revendications précédentes.

11. Machine électrique selon la revendication 10, **caractérisée en ce que** l'un, en particulier exactement un, rotor est prévu.

12. Machine électrique selon l'une des revendications 10 ou 11, **caractérisée en ce qu'** un rotor en forme de disque est prévu.

13. Machine électrique selon les revendications 10 à 12, **caractérisée en ce qu'** il s'agit d'une machine à flux transversal.
